# EUROPÄISCHE PATENTSCHRIFT

(11) **EP 2 257 423 B1**
(45) Veröffentlichungstag und Bekanntmachung des Hinweises auf die Patenterteilung: **17.08.2011**
(21) Anmeldenummer: 09721430.8
(22) Anmeldetag: 18.02.2009
(51) Int. Cl.: B29D 29/00, B60C 1/00, C08K 3/04, C08L 7/00, F16G 5/06

(54) **KAUTSCHUKMISCHUNG MIT NIEDRIGEM WÄRMEAUFBAU**
RUBBER MIXTURE WITH LOW HEAT BUILD-UP
MÉLANGE DE CAOUTCHOUC À FAIBLE GÉNÉRATION DE CHALEUR

(30) Priorität: 19.03.2008 DE 102008015023
(43) Veröffentlichungstag der Anmeldung: 08.12.2010
(73) Patentinhaber: Continental Reifen Deutschland GmbH, 30165 Hannover (DE)
(72) Erfinder: DE-RIVA PEREZ, Julian, 33203 Gijon (ES); WEBER, Christian, 30826 Garbsen (DE); KRAMER, Thomas, 31832 Springe (DE); KOELLE, Philipp, 30451 Hannover (DE)
(74) Vertreter: Finger, Karsten
(86) Internationale Anmeldenummer: PCT/EP2009/051881
(87) Internationale Veröffentlichungsnummer: WO 2009/115383

(56) Entgegenhaltungen:
- EP-A- 0 704 481
- EP-A- 0 738 613
- EP-A- 1 083 201
- EP-A- 1 120 335
- EP-A- 1 837 206
- US-A1- 2005 209 394

## Beschreibung

Die Erfindung betrifft eine Kautschukmischung, insbesondere für Fahrzeugluftreifen, Gurte und Riemen.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt. So ist eine Verbesserung des Wärmeaufbaus meist mit einem schlechteren Abriebsverhalten des Reifens verbunden. Der Wärmeaufbau steht in direktem Zusammenhang zum Rollwiderstand. Je höher der Wärmeaufbau, desto schlechter der Rollwiderstand.

Um die thermische Haltbarkeit und / oder den Rollwiderstand von Fahrzeugreifen zu verbessern, wird der Laufstreifen häufig geteilt. Der obere Teil, die so genannte Cap, ist eher abriebs- und schnittfest, während der untere Teil, die so genannte Base, eine Mischung mit besonders niedrigem Wärmeaufbau ist.

Bislang wurde zur Optimierung des Wärmeaufbaus, insbesondere für die Base-Mischung, die Mischung entweder mit hohen Gewichtsanteilen eines Niedrigstruktur-Rußes versehen oder vergleichsweise teurer Ruß mit einer hohen Oberflächenaktivität verwendet. Bei letzterer Maßnahme muss meist noch eine nicht unerhebliche Menge an Kieselsäure oder Zinkoxid hinzugefügt werden.

Beide Maßnahmen haben jedoch den Nachteil, dass der niedrige Wärmeaufbau zu Lasten des Abriebverhaltens erzeugt wird.

Zum Stand der Technik sind folgende Druckschriften zu würdigen:
(D1) KR 20040091169 A
(D2) JP 2005336303 A
(D3) JP 8073657 A
(D4) EP 1593528 A1
(D5) DE 69823479 T2
(D6) JP 200239452 A
(D7) JP 2003012860 A

D1 beschreibt eine Kautschukmischung für die Seitenwand von LKW-Reifen mit verbessertem Ermüdungsverhalten und verbesserter Ozonschutzfähigkeit. Die Kautschukmischung enthält eine Kombination von Butadienkautschuk und Naturkautschuk im Verhältnis 30 ∼ 70 / 70 ∼ 30 und 45 - 50 Gewichtsanteile Ruß mit einer Iodabsorptionszahl im Bereich von 64 - 70 m²/g und einer DPB- Zahl im Bereich von 115 - 225 m² /100g. Weiterhin enthält sie 2,5 - 8 Gewichtsanteile Kieselsäure mit 0,4 - 1,2 Gewichtsanteilen eines Kieselsäurebinders.

Aus D2 ist ein Fahrzeugluftreifen enthaltend eine Kautschukmischung mit verbessertem Abriebsverhalten, verbessertem Nassgriff und geringem Wärmeaufbau enthaltend 30 - 80 Gewichtsanteile Naturkautschuk und 20 - 70 Gewichtsanteile Butadienkautschuk und / oder Styrolbutadienkautschuk bekannt. Des Weiteren enthält die Kautschukmischung 40 - 60 Gewichtsanteile Füllstoff, wovon 30 - 70 Gewichtsprozent Kieselsäure sind, und 5 - 20 Gewichtsprozent eines Kieselsäurebinders.

D3 beschreibt einen Fahrzeugluftreifen mit verbessertem Abrieb, verbesserter Alterungsbeständigkeit, verbessertem Nassgriff und verbessertem Verhalten auf Eis und

Schnee. Der Fahrzeugluftreifen enthält eine Laufstreifenmischung enthaltend 60 phr oder weniger Ruß mit einer Stickstoffoberfläche von 120 m²/g oder höher und 5 - 40 phr Kieselsäure und 80 Gewichtsprozent oder mehr Naturkautschuk und Butadienkautschuk. Des Weiteren enthält die Kautschukmischung einen niedermolekularen, flüssigen Dienkautschuk.

Ein Fahrzeugreifen mit verbessertem Rollwiderstand, verbesserten Handlingeigenschaften und verbessertem Abriebsverhalten ist aus D4 bekannt. Der Reifen enthält eine Kautschukmischung enthaltend 55 - 98 phr Naturkautschuk, 2 - 45 phr Butadienkautschuk mit einem Molekulargewicht kleiner 200000 g/mol, 0 - 20 phr zumindest eines weiteren Dienkautschuks und 30 - 120 phr Füllstoff enthaltend 30 - 120 phr Ruß und 0 - 60 phr amorphes, synthetisches Silika. Eine Silankupplungsagens ist ebenso enthalten und der Ruß ist ganz oder zum Teil mit Silika oberflächenbehandelt.

In der D5 wird eine Kautschukmischung bereitgestellt, die eine Verbesserung des Rollwiderstandes ohne Beeinflussung der Abriebsbeständigkeit und Nassgriffigkeit ermöglicht. Das Kautschukgemisch umfasst wenigstens zwei verschiedene Copolymere, einen ersten Verstärkerfüllstoff auf Russbasis mit einer DBP-Zahl von wenigstens 110ml/100g und einem zweiten Verstärkerfüllstoff auf Kieselerde-Basis in einer Menge, bei der die Summe aus erstem und zweitem Verstärkerfüllstoff zwischen 50 und 100 phr liegt und beide in der Polymerbasis gleichmäßig verteilt sind.

D6 beschreibt eine abriebsbeständige Kautschukmischung, die 100 Gewichtsanteile Naturkautschuk und / oder synthetischen Dienkautschuk, 10 Gewichtsanteile Kieselsäure, 0 - 90 Gewichtsanteile Ruß und 2 - 10 Gewichtsanteile Ester und Fettsäure enthält.

D7 offenbart eine Kautschukmischung mit exzellentem Abriebsverhalten, guter Verarbeitbarkeit und guten Reißeigenschaften. Die Kautschukmischung enthält 35 - 90 phr natürlichen und / oder synthetischen Naturkautschuk, 10 - 65 phr Butadienkautschuk, 45 - 60 phr Ruß, 2 - 10 phr Kieselsäure und 2 - 10 phr modifizierten flüssigen Butadienkautschuk.

Der Erfindung liegt die Aufgabe zu Grunde, eine Kautschukmischung, insbesondere für Fahrzeugluftreifen, Gurte und Riemen, bereitzustellen, die eine weitere Verbesserung hinsichtlich des Konfliktes zwischen Wärmeaufbau und Abrieb bewirkt.

Gelöst wird diese Aufgabe durch eine Kautschukmischung mit folgender Zusammensetzung:
- 95 - 100 phr zumindest eines natürlichen oder synthetischen Polyisoprens und
- 0 - 5 phr zumindest eines weiteren polaren oder unpolaren Kautschuks und
- 1 - 10 phr Kieselsäure und
- 20 - 40 phr zumindest eines Rußes mit einer Iodzahl kleiner oder gleich 120 g / kg und einer DBP-Zahl größer oder gleich 90 cm³ /100g und
- 0,1 - 5 phr zumindest eines Weichmacheröls und
- 0,1 - 10 phr Zinkoxid und
- 2 - 100 phr weitere Zusatzstoffe.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise wurde gefunden, dass durch die Kombination von einem vergleichsweise hohen Gewichtsanteil an natürlichem und / oder synthetischem Polyisopren und bestimmten Russtypen und einer geringen Menge an Kieselsäure, die nicht oder teilweise oder vollständig durch ein geeignetes Silankupplungsagens angebunden ist, der Abriebsvert auf dem gleichen Niveau verbleibt oder sich sogar verbessert und der Wärmeaufbau verringert, d.h. sich der Rollwiderstand verbessert. Dadurch ist es möglich den Zielkonflikt zwischen Wärmeaufbau und Abrieb zu entkoppeln. Dies gilt nicht nur für den Fahrzeuglaufstreifen, bei geteiltem Laufstreifen insbesondere für die Base, sondern auch für weitere innere Reifenbauteile. Die

Kautschukmischungen für die weiteren inneren Reifenbauteile werden im Folgenden zusammengefasst, und wie in der Reifentechnologie üblich, auch als body compounds oder body-Mischungen bezeichnet.

Weitere Anwendung findet die erfindungsgemäße Kautschukmischung in der Mischungsentwicklung für Riemen und Gurte, insbesondere für Fördergurte.

Im täglichen Einsatz unterliegt insbesondere die Laufseite von Fördergurten starken mechanischen Beanspruchungen, z. B. bei Umlenkung an Antriebs-, Umlenk- und / oder Knicktrommeln und Aushalten der auftretenden Zugkräfte. Daher ist auch hier das Abriebsverhalten bei gleich bleibenden weiteren viskoelastischen Eigenschaften, wie z.B. der Rückprallelastizität, zur Sicherung einer langen Lebensdauer von großer Bedeutung.

Die Kautschukmischung enthält 95 - 100 phr, bevorzugt 95 - 99,9 phr, zumindest eines natürlichen oder synthetischen Polyisoprens und 0 - 5 phr, bevorzugt 0,1 - 5 phr, eines weiteren polaren oder unpolaren Kautschuks.

Der polare oder unpolare Kautschuk ist dabei ausgewählt aus der Gruppe, bestehend aus Butadien-Kautschuk und / oder Styrolbutadienkautschuk und / oder lösungspolymerisierter Styrolbutadienkautschuk und / oder emulsionspolymerisierter Styrolbutadienkautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer. Insbesondere Styrol-Isopren-Butadien-Terpolymer, Butylkautschuk, Halobutylkautschuk oder Ethylen-Propylen-Dien-Kautschuk kommen bei der Herstellung von Fördergurten zum Einsatz.

Bevorzugt ist es, wenn es sich bei dem weiteren polaren oder unpolaren Kautschuk um zumindest einen Butadienkautschuk und / oder um zumindest einen Styrolbutadienkautschuk, der lösungspolymerisiert oder emulsionspolymerisiert sein kann, handelt.

Die erfindungsgemäße Kautschukmischung enthält 1 - 10 phr, bevorzugt 1 - 7 phr, besonders bevorzugt 1 - 5 phr, Kieselsäure. Von dieser Gesamtmenge an Kieselsäure können 0 - 10 phr durch ein Kupplungsagens, bevorzugt Silan, an die Polymermatrix angebunden werden und / oder 0 - 10 phr nicht an die Polymermatrix angebunden werden. Dies bedeutet, dass, ausgehend von der Gesamtmenge an Kieselsäure, diese durch das Kupplungsagens vollständig oder nur teilweise an die Polymermatrix angebunden wird oder keinerlei Anbindung der Kieselsäure an die Polymermatrix erfolgt.

Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.

Erfindungsgemäß werden Kieselsäuren mit einer Stickstoff-Oberfläche zwischen 120 und 300 m²/g, bevorzugt zwischen 150 und 250 m²/g, und einer CTAB-Oberfläche zwischen 120 und 230 m²/g, bevorzugt zwischen 140 und 200 m²/g, eingesetzt.

Falls ein Kupplungsagens in Form von Silan verwendet wird, so beträgt die Menge des Silans 0 - 3 phr, bevorzugt 0,1 - 2 phr. Als Silan-Kupplungsagenzien können dabei alle dem Fachmann für die Verwendung in Kautschukmischungen bekannten Silan-Kupplungsagenzien verwendet werden.

Das zusätzliche Einmischen von nicht angebundener Kieselsäure ist ein in der Kautschuktechnologie übliches Verfahren, um die Reißeigenschaften von Kautschukmischungen, insbesondere der für LKW-Laufstreifen, zu verbessern. Nachteilig wirkt sich dies allerdings auf den Wärmeaufbau in der betreffenden Kautschukmischung aus, was sich in einer geringen Rückprallelastizität zeigt. Dies drückt sich insbesondere in Kautschukmischungen für Laufstreifen für Fahrzeugreifen als erhöhter Rollwiderstand aus. Die Verwendung von angebundener Kieselsäure führt allerdings zu einer Optimierung der Reißeigenschaften.

Zur Verbesserung des Rollwiderstandes ist daher der Einsatz von angebundener Kieselsäure sinnvoll, während für Kautschukmischungen mit verbesserten Reißeigenschaften der Einsatz von nicht angebundener Kieselsäure sinnvoll ist. Eine Kombination aus geringen Mengen angebundener und nicht angebundener Kieselsäure führt zu einer Kompromisslösung, so dass sich dadurch der Zielkonflikt zwischen Rollwiderstand und Reißeigenschaften steuern lässt.

Erfindungswesentlich ist, dass die Kautschukmischung zumindest einen Ruß mit einer Iodzahl kleiner oder gleich 120 g / kg und einer DBP-Zahl größer oder gleich 90 cm³ /100g enthält. Die Menge des Rußes beträgt 20 - 40 phr, bevorzugt 25 - 35 phr, besonders bevorzugt 25 - 32 phr. In einer bevorzugten Ausführungsform hat der Ruß eine Iodzahl, gemäß ASTM D 1510, die auch als Iodabsorptionszahl bezeichnet wird, kleiner oder gleich 120 g / kg und eine DBP-Zahl größer oder gleich 100 cm³ / 100g, bevorzugt größer oder gleich 120 cm³ / 100g. Die DBP-Zahl gemäß ASTM D 2414 bestimmt das spezifische Absorptionsvolumen eines Rußes oder eines hellen Füllstoffes mittels Dibutylphthalat. Die Verwendung eines solchen Russtyps in der Kautschukmischung gewährleistet eine Verbesserung des Wärmeaufbaus, ohne das Abriebverhalten negativ zu beeinflussen, was der Fachmann üblicherweise bei diesen vergleichsweise geringen Gewichtsanteilen von Ruß beobachten würde. Bevorzugt ist hierbei, wenn lediglich ein Russtyp in der Kautschukmischung verwendet wird.

Die erfindungsgemäße Kautschukmischung enthält weiterhin 0,1 - 5 phr zumindest eines Weichmacheröls, wobei das Weichmacheröl ein Mineralöl ist, das ausgewählt ist aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle.

Es können in der Kautschukmischung noch 0 - 5 phr zumindest eines weiteren zusätzlichen Weichmachers vorhanden sein. Dieser weitere Weichmacher kann ein synthetischer Weichmacher und / oder eine Fettsäure und / oder ein Fettsäurederivat und / oder ein Harz und / oder ein Faktis sein.

Des Weiteren enthält die Kautschukmischung noch 0,1 - 10 phr, bevorzugt 0,2 - 8 phr, besonders bevorzugt 0,2 - 4 phr, Zinkoxid.

Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 m²/g auf. Es kann aber auch so genanntes nano-Zinkoxid mit einer BET-Oberfläche von 10 bis 60 m²/g verwendet werden.

Weiterhin enthält die Kautschukmischung noch weitere Zusatzstoffe.

Weitere Zusatzstoffe beinhaltet im Wesentlichen das Vernetzungssystem (Vernetzer, Beschleuniger und Verzögerer), Ozonschutzmittel, Alterungsschutzmittel, Mastikationshilfsmittel und weitere Aktivatoren.

Der Mengenanteil der Gesamtmenge an weiteren Zusatzstoffen beträgt 2 bis 100 phr, bevorzugt 3 bis 80 phr und besonders bevorzugt 5 - 60 phr.

Die Vulkanisation der Kautschukmischung wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer, die erfindungsgemäß in den obig beschriebenen Zusatzstoffen enthalten sind, und Vulkanisationsaktivatoren, wie obig beschrieben, enthalten.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem

(Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Der Erfindung liegt weiterhin die Aufgabe zu Grunde, obig beschriebene Kautschukmischung, zur Herstellung von Fahrzeugluftreifen, insbesondere zur Herstellung des Laufstreifens eines Reifens und / oder einer Body-Mischung eines Reifens und zur Herstellung von Riemen und Gurten zu verwenden.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Ist der Laufstreifen, wie eingangs beschrieben, zweigeteilt, so findet die Kautschukmischung bevorzugt Anwendung als Mischung für die Base.

Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings. Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Die Erfindung soll nun anhand von Vergleichs- und Ausführungsbeispielen, die in Tabellen 1 und 2 zusammengefasst sind, näher erläutert werden. Tabelle 3 stellt die Charakteristika der verwendeten Rußtypen dar.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Shore-A-Härte bei Raumtemperatur gemäß DIN 53 505
- Rückprallelastizität bei Raumtemperatur gemäß DIN 53 512
- Spannungswerte bei 300 % Dehnung bei Raumtemperatur gemäß DIN 53 504
- Zugfestigkeit bei Raumtemperatur gemäß DIN 53 504
- Weiterreißwiderstand nach Graves bei Raumtemperatur gemäß DIN 53 515
- Abrieb nach Grosch gemäß Grosch, K.A., the 131th ACS Rubber Div. Meeting, No. 97 (1987) und Grosch, K.A. et al., Kautschuk Gummi Kunststoffe, 50, 841 (1997)

**Tabelle 1**

| **Bestandteile** | **Einheit** | **Referenz** | **V1** | **V2** |
|---|---|---|---|---|
| Polyisopren | phr | 100 | 100 | 100 |
| Kieselsäure | phr | 5 | 5 | 5 |
| Silan | phr | 0 | 0 | 0 |
| N220 - Ruß | phr | 33 | -- | -- |
| N339 - Ruß | phr | -- | 30 | 32 |
| Zinkoxid | phr | 3,5 | 3,5 | 3,5 |
| Weichmacher | phr | 2 | 2 | 2 |
| Beschleuniger | phr | 1,6 | 1,5 | 1,5 |
| Schwefel | phr | 1,4 | 1,7 | 1,7 |

| | | | | |
|---|---|---|---|---|
| Polyisopren: SMR 10 CE / CE Regional Rubber-Bukit Mertajam Kieselsäure: Active Silica Gran. / PPG Industries Chemicals BV Zinkoxid: Zinc Oxide Gran. / AGALSA Weichmacher: Pristerene 4932 / UNIQEMA | | | | |

**Tabelle 2**

| **Eigenschaften** | **Einheit** | **Referenz** | **V1** | **V2** |
|---|---|---|---|---|
| | | | | |
| Härte bei RT | ShoreA | 55,7 | 56,6 | 57,6 |
| Rückprall bei RT | % | 61,6 | 65,4 | 64,7 |
| Spannungswert 300% | MPa | 9,2 | 10,2 | 10,7 |
| | | | | |
| Zugfestigkeit bei RT | MPa | 22,9 | 23,2 | 23,7 |
| | | | | |
| Graves | N/mm | 61 | 69 | 64 |
| | | | | |
| Abrieb | mm³ | 100 | 94 | 108 |

**Tabelle 3**

| **Ruß** | Iod-Zahl [mg/g] | DBP-Zahl [cm³/100g] |
|---|---|---|
| N220 | 121 | 114 |
| N339 | 90 | 120 |

Die Referenz ist hier eine nach dem Stand der Technik üblicherweise verwendete Kautschukmischung, wie sie insbesondere für die Base des Laufstreifens eingesetzt wird. In V1 wird durch die Zugabe einer vergleichsweise geringen Menge des Russtyps N339 der Wärmeaufbau verbessert, d.h. die Rückprallelastizität deutlich erhöht, womit ein Vorteil in der Haltbarkeit und im Rollwiderstand des Fahrzeugreifens erreicht wird. Die weiteren mechanischen Eigenschaften der Kautschukmischung, wie Härte, Spannung bei hohen Dehnungen und Zugfestigkeit, verbleiben auf gleichem Niveau. Ebenso erscheint das Abriebsverhalten sich auf annähernd gleichem Niveau zu verhalten. Eine vergleichsweise geringfügige Erhöhung des Russanteils in der Kautschukmischung führt sogar zu einer deutlichen Verbesserung des Abriebverhaltens, während sich kein Einfluss auf den Wärmeaufbau nachweisen lässt.

Somit ist eindeutig zu erkennen, dass durch eine erfindungsgemäße Kautschukmischung der Zielkonflikt zwischen Wärmeaufbau und Abrieb gelöst bzw. zumindest entschärft wird.

## Patentansprüche

1. Kautschukmischung, **gekennzeichnet durch** folgende Zusammensetzung:
- 95 - 100 phr zumindest eines natürlichen oder synthetischen Polyisoprens und
- 0 - 5 phr zumindest eines weiteren polaren oder unpolaren Kautschuks und
- 1 - 10 phr Kieselsäure und
- 20 - 40 phr zumindest eines Rußes mit einer Iodzahl kleiner oder gleich 120 g / kg und einer DBP-Zahl größer oder gleich 90 cm³ /100g und
- 0,1 - 5 phr zumindest eines Weichmacheröls und
- 0,1 - 10 phr Zinkoxid und
- 2 - 100 phr weitere Zusatzstoffe.

2. Kautschukmischung nach Anspruch 1, **dadurch gekennzeichnet, dass** der weitere polare oder unpolare Kautschuk ausgewählt ist aus der Gruppe, bestehend aus Butadien-Kautschuk und / oder Styrolbutadienkautschuk und / oder lösungspolymerisierter Styrolbutadienkautschuk und / oder emulsionspolymerisierter Styrolbutadienkautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer.

3. Kautschukmischung nach Anspruch 1 oder 2, **dadurch gekennzeichnet, dass** der weitere Kautschuk zumindest ein Butadien-Kautschuk ist.

4. Kautschukmischung nach einem der Ansprüche 1 bis 3, **dadurch gekennzeichnet, dass** der weitere Kautschuk zumindest eine Styrolbutadienkautschuk ist.

5. Kautschukmischung nach einem der Ansprüche 1 bis 4, **dadurch gekennzeichnet, dass** sie 95 - 99,9 phr zumindest eines natürlichen oder synthetischen Polyisoprens und 0,1 - 5 phr zumindest eines weiteren polaren oder unpolaren Kautschuks enthält.

6. Kautschukmischung nach einem der Ansprüche 1 bis 5, **dadurch gekennzeichnet, dass** sie 1 - 7 phr Kieselsäure enthält.

7. Kautschukmischung nach einem der Ansprüche 1 bis 6, **dadurch gekennzeichnet, dass** von der Gesamtmenge an Kieselsäure 0 - 10 phr Kieselsäure durch ein Kupplungsagenz an die Polymermatrix angebunden sind.

8. Kautschukmischung nach Anspruch 7, **dadurch gekennzeichnet, dass** das Kupplungsagenz ein Silan ist.

9. Kautschukmischung nach einem der Ansprüche 1 bis 8, **dadurch gekennzeichnet, dass** von der Gesamtmenge an Kieselsäure 0 - 10 phr Kieselsäure nicht an die Polymermatrix angebunden sind.

10. Kautschukmischung nach einem der Ansprüche 1 bis 9, **dadurch gekennzeichnet, dass** die Menge des Rußes 25 - 35 phr beträgt.

11. Kautschukmischung nach einem der Ansprüche 1 bis 10, **dadurch gekennzeichnet, dass** das Weichmacheröl ein Mineralöl ist.

12. Kautschukmischung nach Anspruch 11, **dadurch gekennzeichnet, dass** das Mineralöl ausgewählt ist aus der Gruppe, bestehend aus DAE und / oder RAE und / oder TDAE und / oder MES und / oder naphtenische Öle.

13. Verwendung einer Kautschukmischung nach einem der Ansprüche 1 bis 12 zur Herstellung eines Reifens.

14. Verwendung einer Kautschukmischung nach Anspruch 13 zur Herstellung des Laufstreifens eines Reifens, insbesondere der Base eines Laufstreifens, und / oder einer Body-Mischung eines Reifens, beinhaltend Seitenwand, Innenseele, Apex, Gürtel, Schulter, Gürtelprofil, Squeege, Karkasse, Wulstverstärker und / oder Bandage.

15. Verwendung einer Kautschukmischung nach einem der Ansprüche 1 bis 12 zur Herstellung eines Gurtes oder Riemens.

## Claims

1. Rubber mixture, **characterized by** the following composition:
- 95-100 phr of at least one natural or synthetic polyisoprene and
- 0-5 phr of at least one further polar or nonpolar rubber and
- 1-10 phr of silica and
- 20-40 phr of at least one carbon black with an iodine number less than or equal to 120 g/kg and a DBP number greater than or equal to 90 cm³/100 g and
- 0.1-5 phr of at least one plasticizer oil and
- 0.1-10 phr of zinc oxide and
- 2-100 phr of further additives.

2. Rubber mixture according to Claim 1, **characterized in that** the further polar or nonpolar rubber is selected from the group consisting of butadiene rubber and/or styrene-butadiene rubber and/or solution-polymerized styrene-butadiene rubber and/or emulsion-polymerized styrene-butadiene rubber and/or liquid rubbers and/or halobutyl rubber and/or polynorbornene and/or isoprene-isobutylene copolymer and/or ethylenepropylene-diene rubber and/or nitrile rubber and/or chloroprene rubber and/or acrylate rubber and/or fluoro rubber and/or silicone rubber and/or polysulfide rubber and/or epichlorohydrin rubber and/or styrene-isoprene-butadiene terpolymer.

3. Rubber mixture according to Claim 1 or 2, **characterized in that** the further rubber is at least one butadiene rubber.

4. Rubber mixture according to any of Claims 1 to 3, **characterized in that** the further rubber is at least one styrene-butadiene rubber.

5. Rubber mixture according to any of Claims 1 to 4, **characterized in that** it contains 95-99.9 phr of at least one natural or synthetic polyisoprene and 0.1-5 phr of at least one further polar or nonpolar rubber.

6. Rubber mixture according to any of Claims 1 to 5, **characterized in that** it contains 1-7 phr of silica.

7. Rubber mixture according to any of Claims 1 to 6, **characterized in that** 0-10 phr of the total amount of silica is bonded to the polymer matrix by a coupling agent.

8. Rubber mixture according to Claim 7, **characterized in that** the coupling agent is a silane.

9. Rubber mixture according to any of Claims 1 to 8, **characterized in that** 0-10 phr of the total amount of silica is not bonded to the polymer matrix.

10. Rubber mixture according to any of Claims 1 to 9, **characterized in that** the amount of the carbon black is 25-35 phr.

11. Rubber mixture according to any of Claims 1 to 10, **characterized in that** the plasticizer oil is a mineral oil.

12. Rubber mixture according to Claim 11, **characterized in that** the mineral oil is selected from the group consisting of DAE and/or RAE and/or TDAE and/or MES and/or naphthenic oils.

13. Use of a rubber mixture according to any of Claims 1 to 12 for producing a tire.

14. Use of a rubber mixture according to Claim 13 for producing the tread of a tire, especially the base of a tire, and/or a body mixture of a tire, comprising sidewall, inner liner, apex, belt, shoulder, belt profile, squeegee, carcass, bead reinforcer and/or bandage.

15. Use of a rubber mixture according to any of Claims 1 to 12 for producing a belt or drive belt.

## Revendications

1. Mélange de caoutchouc, **caractérisé par** la composition suivante :
- 95 à 100 phr d'au moins un polyisoprène naturel ou synthétique et
- 0 à 5 phr d'au moins un autre caoutchouc polaire ou non polaire et
- 1 à 10 phr de silice et
- 20 à 40 phr d'au moins une suie ayant un indice d'iode inférieur ou égal à 120 g/kg et un indice DBP supérieur ou égal à 90 cm³/100 g et
- 0,1 à 5 phr d'au moins une huile plastifiante et
- 0,1 à 10 phr d'oxyde de zinc et
- 2 à 100 phr d'additifs supplémentaires.

2. Mélange de caoutchouc selon la revendication 1, **caractérisé en ce que** l'autre caoutchouc polaire ou non polaire est choisi dans le groupe constitué par le caoutchouc de butadiène et/ou le caoutchouc de styrène-butadiène et/ou le caoutchouc de styrène-butadiène polymérisé en solution et/ou le caoutchouc de styrène-butadiène polymérisé en émulsion et/ou les caoutchoucs liquides et/ou le caoutchouc d'halogénobutyle et/ou le polynorbornène et/ou le copolymère isoprène-isobutylène et/ou le caoutchouc éthylène-propylène-diène et/ou le caoutchouc de nitrile et/ou le caoutchouc de chloroprène et/ou le caoutchouc d'acrylate et/ou le caoutchouc fluoré et/ou le caoutchouc de silicone et/ou le caoutchouc de polysulfure et/ou le caoutchouc d'épichlorhydrine et/ou le terpolymère styrène-isoprène-butadiène.

3. Mélange de caoutchouc selon la revendication 1 ou 2, **caractérisé en ce que** l'autre caoutchouc est au moins un caoutchouc de butadiène.

4. Mélange de caoutchouc selon l'une quelconque des revendications 1 à 3, **caractérisé en ce que** l'autre caoutchouc est au moins un caoutchouc de styrène-butadiène.

5. Mélange de caoutchouc selon l'une quelconque des revendications 1 à 4, **caractérisé en ce qu'**il contient 95 à 99,9 phr d'au moins un polyisoprène naturel ou synthétique e t 0 , 1 à 5 ph r d'au moins un autre caoutchouc polaire ou non polaire.

6. Mélange de caoutchouc selon l'une quelconque des revendications 1 à 5, **caractérisé en ce qu'**il contient 1 à 7 phr de silice.

7. Mélange de caoutchouc selon l'une quelconque des revendications 1 à 6, **caractérisé en ce que**, sur la quantité totale de silice, 0 à 10 phr de silice sont reliés à la matrice polymère par un agent de couplage.

8. Mélange de caoutchouc selon la revendication 7, **caractérisé en ce que** l'agent de couplage est un silane.

9. Mélange de caoutchouc selon l'une quelconque des revendications 1 à 8, **caractérisé en ce que**, sur la quantité totale de silice, 0 à 10 phr de silice ne sont pas reliés à la matrice polymère.

10. Mélange de caoutchouc selon l'une quelconque des revendications 1 à 9, **caractérisé en ce que** la quantité de suie est de 25 à 35 phr.

11. Mélange de caoutchouc selon l'une quelconque des revendications 1 à 10, **caractérisé en ce que** l'huile plastifiante est une huile minérale.

12. Mélange de caoutchouc selon la revendication 11, **caractérisé en ce que** l'huile minérale est choisie dans le groupe constitué par les DAE et/ou RAE et/ou TDAE et/ou MES et/ou les huiles naphténiques.

13. Utilisation d'un mélange de caoutchouc selon l'une quelconque des revendications 1 à 12 pour la fabrication d'un pneu.

14. Utilisation d'un mélange de caoutchouc selon la revendication 13 pour la fabrication de la bande de roulement d'un pneu, notamment de la base d'une bande de roulement, et/ou d'un mélange de carcasse d'un pneu, comprenant une paroi latérale, une âme interne, un bourrage sur tringle, une ceinture, un épaulement, un profilé de ceinture, une raclette, une carcasse, un renforcement de bourrelet et/ou un bandage.

15. Utilisation d'un mélange de caoutchouc selon l'une quelconque des revendications 1 à 12 pour la fabrication d'une sangle ou d'une courroie.
